# EUROPÄISCHE PATENTSCHRIFT

(11) **EP 0 487 934 B1**
(45) Veröffentlichungstag und Bekanntmachung des Hinweises auf die Patenterteilung: **28.08.1996**
(21) Anmeldenummer: 91118701.1
(22) Anmeldetag: 02.11.1991
(51) Int. Cl.: H02B 1/048, H01H 9/02

(54) **Schaltermodul**
Switch unit
Module interrupteur

(30) Priorität: 24.11.1990 DE 4037454
(43) Veröffentlichungstag der Anmeldung: 03.06.1992
(73) Patentinhaber: Marquardt GmbH, D-78604 Rietheim-Weilheim (DE)
(72) Erfinder: Schutzbach, Bernd, W-7200 Tuttlingen (DE); Hugger, Bernd, W-7730 Villingen-Schwenningen (DE)
(74) Vertreter: Patentanwälte Eisele, Otten & Roth

(56) Entgegenhaltungen:
- DE-A- 2 918 640
- DE-B- 1 147 290
- DE-B- 1 640 305
- DE-U- 1 849 281
- FR-A- 2 396 401

## Beschreibung

Die Erfindung betrifft ein Schaltermodul aus mehreren Einzelschaltern mit je einem Sockel, welche in einer gemeinsamen Halterung auf gleicher Ebene nebeneinander angeordnet sind. Ein derartiges Schaltermodul ist beispielsweise aus Dokument DE-B-1 147 290 bekannt.

Es sind Schaltermodule aus Blattfederschaltern bekannt, die zu mehreren kombiniert miteinander in einem gemeinsamen Gehäuse untergebracht sind. Dieses Gehäuse dient als Zwischengehäuse für die Halterung der einzelnen Schalter. Es bewirkt auch eine gewisse Ausrichtung derselben.

Wenn alle Schalter von einem gemeinsamen Betätiger in Funktion gesetzt werden, ist es für eine exakte Arbeitsweise von besonderer Bedeutung, daß die einzelnen Schaltkontakte auf eine gleiche Kontaktebene ausgerichtet sind, damit sie von dem gemeinsamen Betätiger gleichzeitig bedient werden können. Die erforderliche hohe Schaltgenauigkeit ist mit den bisherigen Modulen aus steckbaren Schaltern und einem getrennten Gehäuse aufgrund der auftretenden Toleranzen zwischen den einzelnen Schaltersockeln und der Gehäusewand nicht realisierbar. Neben der bestehenden Lageungenauigkeit ist weiter von Nachteil, daß der Schalter mit dem Zwischengehäuse eine große Materialanhäufung darstellt.

Andererseits ist es praktisch ausgeschlossen, mehrere Blattfederschalter, die je aus mehreren Blattfedern bestehen, in einem Formvorgang mit einem gemeinsamen Sockel zu versehen. So viele Einzelteile in einer Kunststoff-Spritzgußform exakt festzulegen, ist nicht möglich.

Der Erfindung liegt die Aufgabe zugrunde, ein Schaltermodul aus mehreren Einzelschaltern zu schaffen, welches eine hohe Lagegenauigkeit der Einzelschalter garantiert und mit geringem Materialaufwand auskommt.

Erfindungsgemäß wird dies durch die kennzeichnenden Merkmale des Anspruchs 1 erreicht. Zunächst werden untereinander gleiche Einzelschalter mit Kunststoffsockel gefertigt. Diese Einzelsockel sind so gestaltet, daß durch ihre passende Einfügung in eine weitere gemeinsame Spritzform und durch zusätzliche gegenseitige Steckverbindungen eine einwandfreie Lagefixierung der Schalter untereinander möglich ist. Der einzelne Sockel besitzt auf der einen Seite eine federartige Zunge und auf der anderen Seite eine entsprechend den Abmaßen der Zunge gestaltete Nut. Die Nut hat als seitliche Begrenzungen zur genauen Arretierung der Zunge je einen Steg, der die Nut abschließt. Die Zunge des einen Sockels ist in die Nut des anderen Sockels einsteckbar. Die somit aneinander fixierten Einzelschalter lassen sich beliebig zu einer zwei-, drei- oder mehrteiligen Schaltereinheit erweitern. Die zusammengefügte Schaltereinheit wird nun durch einen weiteren Kunststoff-Spritzprozeß zu einem gemeinsamen Modul vereinigt, d. h. die Sockel werden durch Umspritzen zusammengefaßt.

Durch das Spritzwerkzeug werden am gemeinsamen Sockel gleichzeitig Befestigungsmittel angeformt. Diese Befestigungsmittel sind vorzugsweise klauenförmig und besitzen an den freien Schenkelenden je eine Wulst. Die Befestigungsmittel dienen dazu, das Schaltermodul in vorgefertigten Geräteöffnungen so festzuhalten, daß gegenüber dem Betätiger eine maximale Lageangleichung erreicht wird.

Zur innigen und untrennbaren Verbindung der Einzelsockel zu einem Gesamtsockel sind die Einzelsockel mit Durchbrüchen versehen, in welche die eingepreßte Kunststoffmasse eindringt. Ein homogener gemeinsamer Sockel wird insbesondere dadurch erreicht, daß die Kunststoffmasse der Einzelsockel die gleiche oder doch gleichartig wie die zum Umspritzen verwendete Kunststoffmasse ist.

Ein weiterer wichtiger Vorschlag besteht darin, die Trennung der vorzugsweise zweiteiligen Spritzform so zu gestalten, daß der bewegliche Formteil in Längsrichtung der Blattfedern, aus denen der oder die Schalter bestehen, verfährt. Die Formtrennung ist damit bezüglich der Formtrennung des Einzelwerkzeugs um 90° gedreht. Das hat den Vorteil, daß der gemeinsame Sockel eine Dichtfläche ohne Grat und von vollkommener Ebenheit erhält, mit deren Hilfe das Schaltermodul unter Zwischenlage eines entsprechenden Dichtelements an ein Gerätegehäuse oder dgl. einwandfrei abdichtend angesetzt werden kann. Im Mittelbereich des gemeinsamen Sockels sind die gegenseitigen Steckverbindungen der Einzelsockel ebenfalls dicht, da in etwaige Spalte zwischen den Steckverbindungsteilen Kunststoffmasse eindringen kann.

Die Erfindung umfaßt auch das Herstellungsverfahren der Schaltermodule. Es besteht darin, daß zunächst die funktionsfähigen Einzelschalter durch Einbetten der Kontaktteile in jeweils einen Sockel aus Kunststoff getrennt hergestellt werden und daß sodann mehrere dieser Einzelschalter durch Umspritzen ihrer Sockel mit Kunststoff zu einem gemeinsamen Sockel verbunden werden.

Als wesentlicher Vorteil der Erfindung erweist sich die hohe Fertigungsgenauigkeit der einzelnen Schalter, die schon vor dem Umspritzen voll funktionsfähig sind. Außerdem sind die einzelnen Schalter innerhalb des Schaltermoduls exakt positioniert, d. h. sie haben eine gemeinsame Kontaktebene. Daraus folgt eine hohe Schaltgenauigkeit. Vorteilhaft ist auch, daß gegenüber den bisherigen Lösungen sich der Raumbedarf eines solchen Schaltermoduls sehr verkleinert.

Die Erfindung soll nachstehend anhand eines Ausführungsbeispiels näher erläutert werden. Die dazugehörige Zeichnung zeigt:
- Fig. 1: eine Seitenansicht des Schaltermoduls,
- Fig. 2: eine Draufsicht des Schaltermoduls nach Fig. 1,
- Fig. 3: eine Rückansicht des Schaltermoduls nach Fig. 2 in Richtung des Pfeils III,
- Fig. 4: eine Seitenansicht eines Einzelschalters,
- Fig. 5: eine Draufsicht zweier zusammengesteckter Einzelschalter und
- Fig. 6: eine Rückansicht der zusammengesteckten Einzelschalter nach Fig. 5.

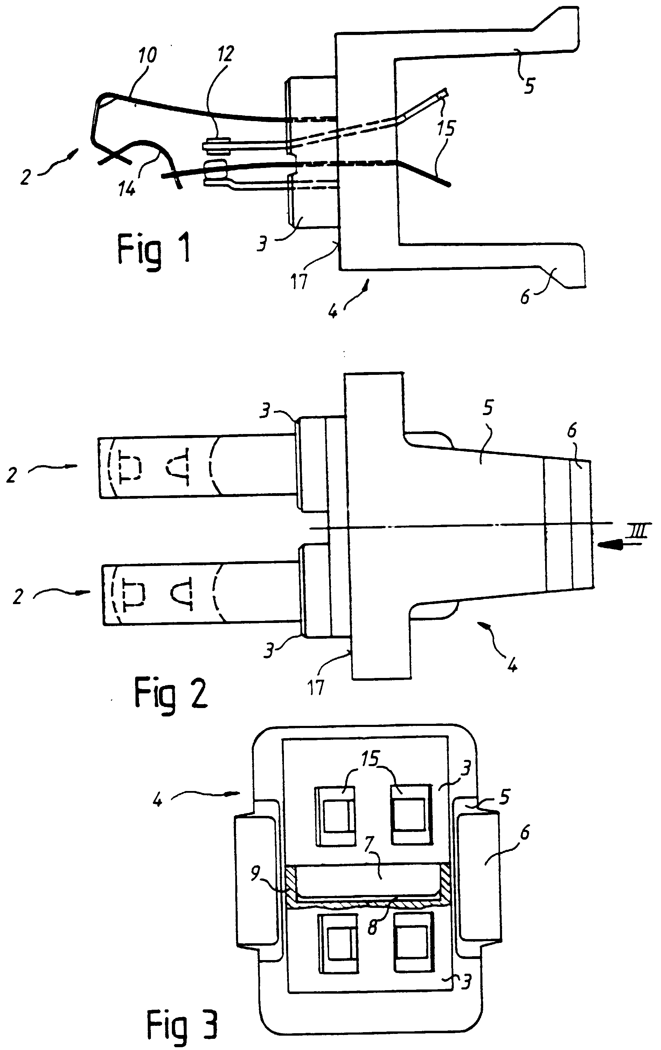

Der in den Figuren 1 bis 3 gezeigte Schaltermodul besteht aus zwei Schaltern 2 mit ursprünglich je einem eigenen Sockel 3 und aus einem gemeinsamen Sockel 4. Am Sockel 4 ist beidseitig eine Klaue 5 mit einer am Ende befindlichen Wulst 6 angeformt. Der gemeinsame Sockel 4 ist durch Umpressen der Einzelsockel 3 mit einem Kunststoff entstanden und faßt die Schalter 2 zu einem Schaltermodul zusammen.

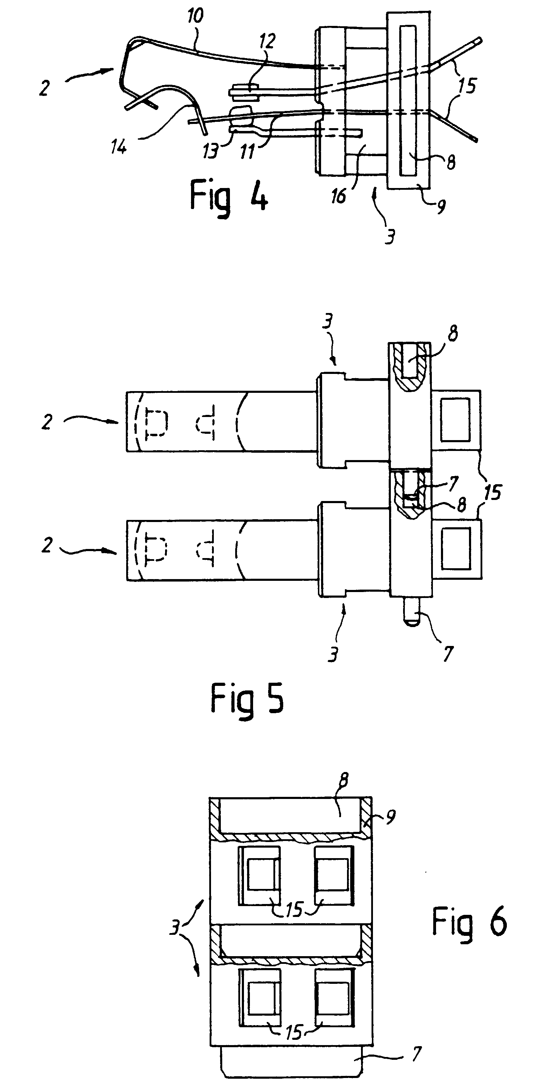

Die Sockel 3 der Schalter 2 (Figuren 4 und 5) besitzen auf den gegenüberliegenden Seiten je eine Feder 7 und eine Nut 8. Die Nut 8 ist dabei so ausgestaltet, daß sie seitlich jeweils durch einen Steg 9 abgeschlossen ist, welcher die Begrenzung für die einzuführende Feder 7 darstellt.

Die im Schaltermodul angeordneten Schalter 2 liegen mit je einem Federhebel 10 auf einer gemeinsamen Kontaktebene. Der jeweilige Einzelsockel 3 umschließt dabei den Federhebel 10, eine Schaltzunge 11, einen Schaltkontakt 12 und einen Anlagekontakt 13. Zwischen dem Federhebel 10 und der Schaltzunge 11 ist eine Rollfeder 14 angeordnet. Die Enden des Schaltkontakts 12 und der Schaltzunge 11 stehen als Lötfahnen 15 rückseitig über den Einzelsockel 3 über.

Wie in Fig. 1 dargestellt, befinden sich alle Federhebel 10 des Schaltermoduls hintereinander auf einer gleichen Kontaktebene. Dies ist deshalb wichtig, damit die Federhebel 10 an einem nicht dargestellten Betätiger gleichzeitig anliegen, und somit im Betrieb keine Schaltdifferenzen auftreten können.

Das in Fig. 2 dargestellte Schaltermodul zeigt deutlich die parallele Lage der Einzelkontakte und gibt eine mögliche Einbaulage in einem nicht weiter dargestellten Gehäuse an. Dabei dient eine als ringsum laufende Schulter ausgebildete Dichtfläche 17 zur Aufnahme einer Flachdichtung oder eines Dichthuts. Die Formtrennung ist so gestaltet, daß sich keine Trennfuge und somit kein Grat über die Dichtfläche 17 erstreckt. Die Seitenansicht des in Fig. 4 dargestellten Einzelschalters weist einen Durchbruch 16 auf, in welchen später der eingepreßte Kunststoff verlaufen kann und somit eine untrennbare Verbindung aller Schalter 2 untereinander bildet.

Fig. 5 zeigt beide Einzelschalter im zusammengesteckten Zustand der Sockel. Diese so vorgefertigte Schaltereinheit wird nun in einer Spritzformvorrichtung, die in Längsrichtung öffnet und schließt, mit dem gleichen Kunststoff umgeben, aus dem auch die Einzelsockel 3 bestehen. In Fig. 6 ist nochmals die Darstellung der ineinandergesteckten einzelnen Sockel 3 zu sehen. In gleicher Weise können auch Module mit drei, vier, fünf oder mehr Schaltern hergestellt werden. Hierbei wird deutlich, daß die seitliche Begrenzung der Federn 7 in den Nuten 8 eine exakte Lage der Einzelschalter in der Spritzvorrichtung sichert und somit einen wesentlichen Einfluß auf die richtige Position aller Schalter beim Spritzvorgang hat.
- 2: Schalter
- 3: Sockel
- 4: gemeinsamer Sockel
- 5: Klaue
- 6: Wulst
- 7: Feder
- 8: Nut
- 9: Steg
- 10: Federhebel
- 11: Schaltzunge
- 12: Schaltkontakt
- 13: Anlagekontakt
- 14: Rollfeder
- 15: Lötfahne
- 16: Durchbruch
- 17: Dichtfläche

## Patentansprüche

1. Schaltermodul aus mehreren Einzelschaltern mit je einem Sockel, wobei die Einzelschalter in einer gemeinsamen Halterung auf gleicher Ebene nebeneinander angeordnet sind, dadurch gekennzeichnet, daß die Sockel (3) der Einzelschalter (2) in einen durch Umspritzen mit einem Kunststoff hergestellten gemeinsamen Sockel (4) eingebettet sind, wobei die Sockel (3) der Einzelschalter (2) derart ausgestaltet sind, daß eine Lagefixierung der Einzelschalter (2) in der Spritzvorrichtung ermöglicht ist.

2. Schaltermodul nach Anspruch 1, dadurch gekennzeichnet, daß die Sockel (3) der Einzelschalter (2) mittels Steckverbindungsteilen aneinander fixierbar sind.

3. Schaltermodul nach Anspruch 2, dadurch gekennzeichnet, daß die Steckverbindungsteile aus einer sich bis fast über die Sockelbreite erstreckenden Feder (7) und einer diese passend aufnehmenden Nut (8) bestehen.

4. Schaltermodul nach Anspruch 1, dadurch gekennzeichnet, daß der gemeinsame Sockel (4) angeformte Befestigungsmittel aufweist.

5. Schaltermodul nach Anspruch 4, dadurch gekennzeichnet, daß die Befestigungsmittel aus beidseitig angeordneten Klauen (5) bestehen, deren Schenkelenden als Wülste (6) ausgebildet sind.

6. Schaltermodul nach Anspruch 1, dadurch gekennzeichnet, daß die Einzelsockel (3) und der gemeinsame Sockel (4) des Schaltermoduls aus gleichartigen Kunststoffen bestehen.

7. Schaltermodul nach Anspruch 1, dadurch gekennzeichnet, daß der gemeinsame Sockel (4) des Schaltermoduls eine sich quer zu den länglichen Schalterelementen erstreckende Dichtfläche (17) aufweist, die infolge entsprechender Formtrennung ganzheitlich von einem einzigen Teil der Spritzform gebildet ist.

8. Verfahren zur Herstellung eines Schaltermoduls aus mehreren Einzelschaltern, wobei funktionsfähige Einzelschalter (2) durch Einbetten der Kontaktteile (10, 11, 12, 13) in jeweils einen Sockel (3) aus Kunststoff getrennt hergestellt werden, dadurch gekennzeichnet, daß die Sockel (3) der Einzelschalter (2) derart ausgestaltet werden, daß eine Lagefixierung der Einzelschalter (2) in einer Spritzvorrichtung ermöglicht ist, und daß sodann mehrere dieser Einzelschalter (2) durch Umspritzen ihrer Sockel (3) mit Kunststoff und Bildung eines gemeinsamen Sockels (4) zu einem Schaltermodul verbunden werden.

## Claims

1. Switch module comprising several individual switches, each with a base, said individual switches being arranged adjacent to one another on the same plane in a common mounting, characterised in that the bases (3) of the individual switches (2) are embedded in a common base (4) produced by extrusion-coating with a plastic, said bases (3) of the individual switches (2) being constructed so as to enable the individual switches (2) to be fixed in position in the extrusion device.

2. Switch module according to Claim 1, characterised in that the bases (3) of the individual switches (2) may be fixed to one another by means of plug-in connection parts.

3. Switch module according to Claim 2, characterised in that the plug-in connection parts comprise a spring (7) extending almost beyond the base width and a groove (8) receiving this to form a fit.

4. Switch module according to Claim 1, characterised in that the common base (4) has moulded-on fastening means.

5. Switch module according to Claim 4, characterised in that the fastening means consist of claws (5) arranged on both sides, their leg ends being constructed as beads.

6. Switch module according to Claim 1, characterised in that the individual bases (3) and the common base (4) of the switch module are made of the same types of plastic.

7. Switch module according to Claim 1, characterised in that the common base (4) of the switch module has a sealing surface (17), which extends transversely to the elongated switch elements and is formed completely by a single portion of the extrusion mould as a result of appropriate mould separation.

8. Process for the production of a switch module comprising several individual switches, wherein operative individual switches (2) are produced separately by embedding the contact parts (10, 11, 12, 13) into a respective base (3) made of plastic,
characterised in that the bases (3) of the individual switches (2) are constructed so as to enable the individual switches (2) to be fixed in position in an extrusion device, and that several of these individual switches (2) are then joined to form a switch module by extrusion-coating their bases (3) with plastic and forming a common base (4).

## Revendications

1. Module de commutateurs constitué de plusieurs commutateurs individuels comportant chacun un socle, les commutateurs individuels étant agencés l'un à côté de l'autre sur le même plan dans un support commun,
caractérisé en ce que les socles (3) des commutateurs individuels (2) sont noyés dans un socle commun (4) fabriqué en une matière synthétique par injection, les socles (3) des commutateurs individuels (2) étant réalisés de sorte qu'une fixation en position des commutateurs individuels (2) dans le dispositif d'injection est possible.

2. Module de commutateurs selon la revendication 1,
caractérisé en ce que les socles (3) des commutateurs individuels (2) peuvent être fixés l'un à l'autre au moyen de pièces de liaison enfichables.

3. Module de commutateurs selon la revendication 2,
caractérisé en ce que les pièces de liaison enfichables sont constituées d'une languette (7) s'étendant sur presque la largeur du socle et d'une rainure (8) recevant celle-ci de façon adaptée.

4. Module de commutateurs selon la revendication 1,
caractérisé en ce que le socle commun (4) présente des moyens de fixation conformés.

5. Module de commutateurs selon la revendication 4,
caractérisé en ce que les moyens de fixation sont constitués de pattes (5) agencées des deux côtés, dont les extrémités de branche sont réalisées sous forme de bourrelets (6).

6. Module de commutateurs selon la revendication 1,
caractérisé en ce que les socles individuels (3) et le socle commun (4) du module de commutateurs sont constitués de matières synthétiques du même type.

7. Module de commutateurs selon la revendication 1,
caractérisé en ce que le socle commun (4) du module de commutateurs présente une surface d'étanchéité (17) s'étendant transversalement aux éléments de commutateur longitudinaux, qui est formée, par suite d'un démoulage correspondant, intégralement par une pièce unique du moule d'injection.

8. Procédé pour fabriquer un module de commutateurs constitué de plusieurs commutateurs individuels, des commutateurs individuels fonctionnels (2) étant fabriqués, de façon séparée, par encastrement des pièces de contact (10,11,12,13) dans un socle respectif (3) en matière synthétique,
caractérisé en ce que les socles (3) des commutateurs individuels (2) sont réalisés de sorte qu'une fixation en position des commutateurs individuels (2) est possible dans un dispositif d'injection et en ce que, ensuite, plusieurs de ces commutateurs individuels (2) sont reliés, par injection de matière synthétique autour de leurs socles (3) et formation d'un socle commun (4), en un module de commutateurs.
